(19) Europäisches Patentamt
European Patent Office
Office européen des brevets

(11) Veröffentlichungsnummer: **0 071 973**
**B1**

(12) **EUROPÄISCHE PATENTSCHRIFT**

(45) Veröffentlichungstag der Patentschrift: **08.01.86**

(21) Anmeldenummer: **82107028.1**

(22) Anmeldetag: **04.08.82**

(51) Int. Cl.[4]: **A 01 N 57/20** // (A01N57/20, 43:74, 43:60, 43:42, 43:40, 39:02, 35:10)

# (54) Herbizide Mittel.

(30) Priorität: **08.08.81 DE 3131495**

(43) Veröffentlichungstag der Anmeldung: **16.02.83 Patentblatt 83/7**

(45) Bekanntmachung des Hinweises auf die Patenterteilung: **08.01.86 Patentblatt 86/2**

(84) Benannte Vertragsstaaten: **DE FR GB IT**

(56) Entgegenhaltungen:
**FR - A - 2 413 034**
**GB - A - 2 007 976**

(73) Patentinhaber: **HOECHST AKTIENGESELLSCHAFT, Postfach 80 03 20, D-6230 Frankfurt am Main 80 (DE)**

(72) Erfinder: **Langelüddeke, Peter, Dr., Nelkenweg 5, D-6238 Hofheim am Taunus (DE)**
Erfinder: **Heinrich, Rudolf, Dr., Taunussstrasse 19, D-6233 Kelkheim (Taunus) (DE)**
Erfinder: **Albrecht, Konrad, Dr., Sodener Strasse 64, D-6233 Kelkheim (Taunus) (DE)**
Erfinder: **Wallmüller, Fritz, Prof.-Sauer-Weg 1, D-8901 Bonstetten (DE)**

EP 0 071 973 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aus GB-A-2 007 976, FR-A-2 413 034 und EP-A-9620 sind synergistisch wirkende Kombinationen von Phosphinothricin (I) und seinen Salzen sowie des Tripeptids SF-1293 (I-Ala-Ala) mit zahlreichen Pflanzenschutzmitteln bekannt.

Es wurde nun gefunden, dass I und sein Tripeptid auch mit anderen Herbiziden, insbesondere aus der Klasse der Phenoxyphenoxy- oder Heteroxyphenoxy-carbonsäurederivate, synergistisch wirksame Kombinationen bildet.

Gegenstand der Erfindung sind herbizide Mittel, die gekennzeichnet sind durch einen Gehalt an einer Verbindung der Formel I,

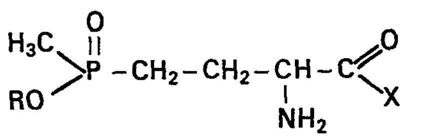
(I)

worin
R = Wasserstoff, $NH_4$, Na, K oder 1/2 Ca und
X = –CH oder –NH–CH($CH_3$)–CONH–CH($CH_3$)–COOH bedeuten, in Kombination mit einer Verbindung der Formel II,

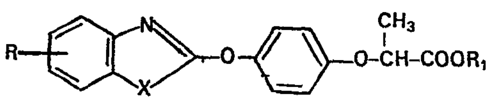
(II)

worin
R = Chlor oder Brom,
X = Sauerstoff oder Schwefel,
$R_1$ = Wasserstoff, ($C_1$–$C_4$)-Alkyl oder ein kationäquivalent einer anorganischen oder organischen Base bedeutet, oder einer Verbindung der Formel III,

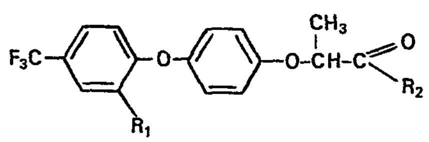
(III)

worin
$R_1$ = Wasserstoff oder Halogen,
$R_2$ = Hydroxy, ($C_1$–$C_6$)-Alkoxy oder Isopropyloximoxy oder die Gruppe –OKat bedeutet, wobei Kat für das Kation einer anorganischen oder organischen Base steht, oder der Verbindung der Formel IV,

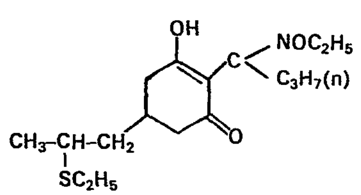
(IV)

oder einer Verbindung der Formel V,

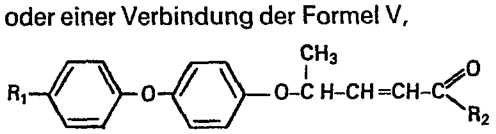
(V)

worin
$R_1$ = Halogen oder Trifluormethyl,
$R_2$ = Hydroxy, ($C_1$–$C_4$)-Alkoxy oder die Gruppe –OKat bedeutet, wobei Kat für das Kation einer anorganischen oder organischen Base steht, oder einer Verbindung der Formel VI,

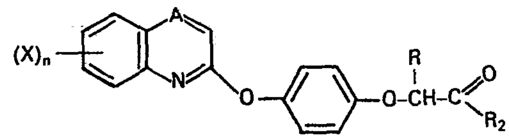
(VI)

worin
A = –CH– oder –N–,
X = Halogen,
n = 0, 1 oder 2,
$R_1$ = Wasserstoff oder eine ($C_1$–$C_4$)-Alkylgruppe und
$R_2$ = Hydroxy, ($C_1$–$C_6$)-Alkoxy oder die Gruppe –OKat bedeutet, wobei Kat für das Kation einer anorganischen oder organischen Base steht.

Die Verbindung der Formel I mit R = Wasserstoff und X = –OH ist auch unter dem Namen Phosphinotricin bekannt geworden.

Besonders bevorzugt ist die Verbindung der Formel I mit R = $NH_4$ und X = –OH (= Verbindung Ia, das Ammoniumsalz des Phosphinotricins). Sie ist z.B. in der DE-OS 27 17 440 beschrieben und kann sowohl als Racemat, als auch als optisch aktive L-Form eingesetzt werden. Weiterhin bevorzugt sind Verbindungen der Formel I mit X = –NH–CH($CH_3$)–CONH–CH($CH_3$)–COOH, wie sie z.B. in der DE-A-28 48 224 beschrieben sind.

Die Verbindungen der Formel II sind z.B. beschrieben in der DE-A-26 40 730. Besonders bevorzugt sind die Verbindungen der Formel II mit X = O, R = Cl und $R_1$ = –$C_2H_5$ (= Verbindung IIa) sowie mit X = S, R = Cl und $R_1$ = –$C_2H_5$ (= Verbindung IIb).

Bevorzugte Verbindung der Formel III ist die mit $R_1$ = H und $R_2$ = –$OCH_3$ (= Verbindung IIa), die z.B. beschrieben ist in Zschr. Pfl. krkh. Pfl. sch. SH VIII (1977) Seite 429, ebenso der entsprechende Isopropyloximester, wobei in Formel III für $R_1$ = H und $R_2$ = –O–N=C($CH_3$)$_2$ steht (= Verbindung IIIb), der z.B. beschrieben ist in der Ep-A-2246.

Die Verbindung der Formel IV ist z.B. im EWRS-Symposium, Mainz 1979, Seite 317 beschrieben.

Von den Verbindungen der Formel V ist diejenige mit $R_1$ = –$CF_3$ und $R_2$ = –$OC_2H_5$ bevorzugt (= Verbindung Va, common name: Difenopenten). Sie ist z.B. aus der japanischen Offenlegungsschrift 79/154 723 bekannt.

Die Verbindungen der Formel VI sind z.B. aus der DE-A-3 004 770 bekannt.

Verbindungen der Formel I bekämpfen ein- und mehrjährige Unkräuter verschiedener botanischer Familien in Dosierungen von vorzugsweise 0,5 bis 1,5 kg/ha Wirkstoff, wobei die Nachwirkung bei mehrjährigen Arten teilweise beträchtlich sein kann. Bei mehrjährigen Gramineen ist aber in manchen Fällen die Wirkung nicht immer befriedigend. Man erzielt zwar einen relativ schnellen,

kurzzeitigen «Abbrenneffekt» auf den grünen Pflanzenteilen (Stengel und Blätter), jedoch hält die Wirkung häufig nicht sehr lange an.

Andererseits ist von den Verbindungen der Formel II bis VI bekannt, dass sie eine spezifische Wirkung auf ein- und mehrjährige Gräser besitzen. Diese biologische Wirkung ist für die genannten Substanzen trotz der unterschiedlichen chemischen Strukturen relativ einheitlich. Dazu gehört auch, dass sie alle in zweikeimblättrigen Kulturen wie z.B. Zuckerrüben, Raps, Bohnen, Soja, Baumwolle selektiv zur Gräserbekämpfung eingesetzt werden können. Dabei kann die Wirkung bei Behandlung aufgelaufener Gräser vorzüglich sein und auch bei Bodenbehandlung, d.h. bei vorbeugender Anwendung gegen aus Samen keimende Pflanzen, sind die Präparate in vielen Fällen ebenfalls gut wirksam. Je nach Bodenfeuchtigkeit oder Lage der Samen kann die Wirkung aber auch unzureichend sein. Gegen ausdauernde Spross- oder Wurzelsysteme im Boden sind sie mehr oder weniger wirkungslos. Die erforderlichen Dosierungen sind von Präparat zu Präparat verschieden. So wird z.B. die Quecke (Agropyron repens) von der Verbindung IIb in Dosierungen von 0,72 bis 1,0, und von der Verbindung IIIa in Dosierungen von 1,44 bis 2,16 kg/ha gut bekämpft, während von der Verbindung IIa weit über 2 kg/ha benötigt werden. Die Verbindung IIb bekämpft Lolium-Arten oder Avena fatua vorzüglich (Dosierungen 0,5 bis 0,75 kg/ha), während IIa besonders gut Digitaria sanguinalis oder Sorghum halepense in Dosierungen von 0,2 bis 0,3 kg/ha erfasst. Ähnliche Unterschiede lassen sich auch für die Substanzen der Formeln IV bis VI finden.

Es wurde nun gefunden, dass Kombinationen aus Verbindungen der Formel I mit Verbindungen der Formeln II bis VI sich durch überraschende synergistische Effekte, vor allem bei der Bekämpfung mehrjähriger Unkräuter, insbesondere mehrjähriger Gramineen, auszeichnen. Sie lassen sich z.B. vorteilhaft einsetzen zu deren Bekämpfung auf offenem, landwirtschaftlich nicht genutztem Gelände, auf Stoppelfeldern, im Forst, in Gelände, das zur Bepflanzung mit Dauerkulturen vorgesehen ist, oder unter ähnlichen Bedingungen.

Auf landwirtschaftlich nicht genutztem Gelände oder auf Stoppelfeldern werden die erfindungsgemässen Mittel bsw. bei der Bekämpfung von Agropyron repens oder von Sorghum halepense eingesetzt; im Gelände, das zur Bepflanzung mit Dauerkulturen vorgesehen ist, können bsw. Arten der folgenden Gramineen-Gattungen bekämpft werden: Agrostis, Alopecurus, Bromus, Dactylis, Festuca, Lolium, oder Poa, unter tropischen Bedingungen insbesondere auch Imperata cylindrica. Im Forst können bsw. die Arten Deschampsia flexuosa, Deschampsia caespitosa, Holcus lanatus, Holcus mollis, Calamagrostis epigeios oder auch die Gattung Carex brizoides aus der Familie der Cyperaceen bekämpft werden.

Die Mischungsverhältnisse der Komponenten I:II bis VI in den erfindungsgemässen synergistischen Kombinationen können innerhalb weiter Grenzen schwanken. Sie liegen im allgemeinen im Bereich von 1:0,1 bis 1:5, vorzugsweise im Bereich von 1:0,2 bis 1:2.

Die erfindungsgemässen Kombinationen aus Verbindungen der Formeln I und II bis VI können entweder als Tankmischungen, bei denen die einzeln formulierten Wirkstoffkomponenten erst unmittelbar vor der Applikation miteinander vermischt werden, oder als Fertigmischungen zur Anwendung gebracht werden. Als Fertigmischungen können sie z.B. in Form von benetzbaren Pulvern, emulgierbaren Konzentraten, Lösungem Dispersionen, Stäubemitteln oder Granulaten formuliert sein und enthalten dann gegebenenfalls die üblichen Formulierungshilfsmittel, wie Netz-, Haft-, Emulgier-, Dispergiermittel, feste oder flüssige Inertstoffe, Mahlhilfsmittel und Lösungsmittel.

Benetzbare Pulver sind in Wasser gleichmässig dispergierbare Präparate, die neben dem Wirkstoff ausser gegebenenfalls Verdünnungs- bzw. Inertstoffen noch Netzmittel, z.B. polyoxäthylierte Alkylphenole, polyoxäthylierte Oleyl- oder Stearylamine, Alkyl- oder Alkylphenylsulfonate und Dispergiermittel, z.B. ligninsulfonsaures Natrium, 2,2'-dinaphthylmethan -6,6'- disulfonsaures Natrium, dibutylnaphthalinsulfonsaures Natrium oder auch oleoylmethyltaurinsaures Natrium enthalten können.

Emulgierbare Konzentration können beispielsweise durch Auflösen des Wirkstoffes in einem organischen Lösungsmittel, z.B. Butanol, Cyclohexanon, Dimethylformamid, Xylol, Isophoron oder auch höhersiedenden Aromaten unter Zusatz von einem oder mehreren Emulgatoren hergestellt werden. Als Emulgatoren können beispielsweise verwendet werden: Alkylarylsulfonsaure Calciumsalze, Fettsäurepolyglykolester, Alkylarylpolyglykoläther, Fettalkoholpolyglykoläther, polyoxäthylierte Oleyl- oder Stearylamine, Propylenoxid- Äthylenoxid- Kondensationsprodukte, Alkylpolyäther, Sorbitan-Fettsäureester, Alkylaryl-Propylenoxid-Äthylenoxid-Kondensationsprodukte u.a.

Stäubemittel erhält man durch Vermahlen des Wirkstoffes mit fein verteilten, festen Stoffen, z.B. Talkum, natürlichen Tonen, wie Kaolin, Bentonit, Pyrophillit oder Diatomeenerde.

Granulate können entweder durch Verdüsen einer Lösung des Wirkstoffes auf adsorptionsfähiges, granuliertes Inertmaterial hergestellt werden oder durch Aufbringen von Wirkstoffkonzentraten mittels eines Bindemittels, z.B. Polyvinylalkohol, polyacrylsaurem Natrium, Methylhydroxyäthylcellulose oder auch Mineralölen auf die Oberfläche von Trägerstoffen, wie Sand, Kaolinite, oder von granuliertem Inertmaterial. Auch können geeignete Wirkstofformulierungen in der für die Herstellung von Düngemittelgranulaten üblichen Weise – gewünschtenfalls in Mischung mit Düngemitteln – hergestellt werden.

Die erfindungsgemässen synergistischen Wirkstoffmischungen aus Verbindungen der Formeln I und II bis VI können in Form üblicher Zubereitungen, insbesondere als benetzbare Pulver, emulgierbare Konzentrate, Lösungen, Dispersionen, Stäubemittel oder Granulate formuliert werden. Der Gesamtwirkstoffgehalt der marktfähigen Formulierungen beträgt dann ca. 2 bis 95 Gew.-%, vorzugsweise 5 bis 80 Gew.-%, wobei der Rest zu 100 Gew.-% aus üblichen Formulierungshilfsmitteln, wie Haft-, Netz-, Emulgier-, Dispergier-, Füll-, Lösungsmitteln und Trägerstoffen besteht.

In benetzbaren Pulvern variiert die Gesamt-Wirkstoffkonzentration I + (II bis VI) im Bereich von etwa 10 bis 80 Gew.-%, der Rest zu 100 Gew.-% besteht aus üblichen Formulierungshilfsmitteln, bei emulgierbaren Konzentraten liegt sie im Bereich von etwa 10 bis 70 Gew.-%. Versprühbare Lösungen enthalten etwa 2 bis 20 Gew.-% an Wirkstoffgemisch. Bei Granulaten beträgt der Gesamt-Wirkstoffgehalt etwa 2 bis 10 Gew.-%. Staubförmige Formulierungen enthalten etwa 5 bis 20 Gew.-% an Wirkstoffgemisch.

Gegenstand der Erfindung sind daher auch herbizide Mittel mit einem Gehalt von 2 bis 95 Gew.-%, vorzugsweise 5 bis 80 Gew.-% an einer Wirkstoffkombination aus Verbindungen der Formeln I + (II bis VI), wobei der Rest zu 100 Gew.-% aus üblichen Formulierungshilfsmitteln besteht.

Zur Anwendung werden die genannten Konzentrate gegebenenfalls in üblicher Weise verdünnt, z.B. benetzbare Pulver, emulgierbare Konzentrate und Dispersionen mittels Wasser. Staubförmige und granulierte Zubereitungen sowie versprühbare Lösungen werden vor der Anwendung im allgemeinen nicht mehr mit weiteren inerten Stoffen verdünnt. Mit den äusseren Bedingungen, wie Temperaturen, Feuchtigkeit u.a. variiert auch die erforderliche Aufwandmenge an den erfindungsgemässen Mitteln. Sie kann sich innerhalb weiter Grenzen bewegen und beträgt im allgemeinen zwischen 0,1 und 10 kg/ha Wirkstoffkombination, vorzugsweise 0,3 bis 5 kg/ha.

Die Erfindung wird durch die nachfolgenden Beispiele näher erläutert.

A. Formulierungbeispiele

Beispiel 1

Ein in Wasser leicht dispergierbares, benetzbares Pulver wird erhalten, indem man:

300 Gew.-Teile Verbindung Ia
100 Gew.-Teile Verbindung IIb
350 Gew.-Teile synthetische Kieselsäure
80 Gew.-Teile ligninsulfonsaures Calcium
50 Gew.-Teile Polyarylsulfonate (Na-Salz)
50 Gew.-Teile oleoylmethyltaurinsaures-Natrium
40 Gew.-Teile Polyvinylalkohol
30 Gew.-Teile basisches Aluminiumsilikat (Kaolinit) in einem Trommelmischer gut mischt und anschliessend auf einer Stiftmühle bei 3000 Upm zerkleinert. Das anfallende Mahlgut wird erneut gemischt und bei 12 000 Upm fein gemahlen.

Beispiel 2

Ein in Wasser leicht dispergierbares, benetzbares Pulver wird erhalten, indem man:

400 Gew.-Teile Verbindung Ia
100 Gew.-Teile Verbindung IIa
300 Gew.-Teile synthetische Kieselsäure
70 Gew.-Teile ligninsulfonsaures Kalium
50 Gew.-Teile Polyarylsulfonat (Na-Salz)
40 Gew.-Teile oleoylmethyltaurinsaures-Natrium
40 Gew.-Teile Polyvinylalkohol in einem Trommelmischer gut mischt und anschliessend wie unter Beispiel 1 beschrieben zunächst bei 3000 Upm und danach bei 12 000 Upm mahlt.

Beispiel 3 bis 5

Spritzpulver erfindungsgemässer Wirkstoffkombinationen können weiterhin dadurch erhalten werden, dass man die Verbindungen IIa bzw. IIb zunächst schmilzt und in einem schnellaufenden Mischer flüssig auf feinverteilter Kieselsäure absorbiert und dabei ein Pulverkonzentrat erhält, welches man anschliessend zur Erzielung einer hohen Feinheit und Homogenität auf einer Schlagkreuzmühle mahlt.

Das resultierende Pulverkonzentrat mischt man sodann mit der Verbindung Ia sowie mit Dispergier- und Netzmitteln aus der Gruppe dinaphthylmethandisulfonsaures Natrium, ligninsulfonsaures Natrium, 2,2'-dinaphthylmethan -6,6'- disulfonsaures Natrium, dibutylnaphthalinsulfonsaures Natrium oder oleoylmethyltaurinsaures Natrium. Die nach dieser Methode hergestellten Beispiele 3 bis 5 haben die folgenden Zusammensetzungen:

| Formulierungs-bestandteile | Zusammensetzung (in Gew.-Teilen | | |
|---|---|---|---|
| | Beispiel 3 | Beispiel 4 | Beispiel 5 |
| Verbindung Ia | 40 | 40 | 45 |
| Verbindung IIa | 10 | 20 | – |
| Verbindung IIb | – | – | 15 |
| Kieselsäure | 38 | 20 | 28 |
| Oleoyl-N-methyltaurid-Natrium | 2 | 2 | 2 |
| Dinaphthylmethansulfonsaures Natrium | 10 | 8 | 10 |

B. Biologische Beispiele

In den folgenden biologischen Beispielen wird bei den geprüften Wirkstoffkombinationen unterschieden zwischen dem aus den Wirkungen der Einzelanwendung der Wirkstoffkomponenten errechneten additiven Wirkungsgrad und dem experimentell gefundenen Wirkungsgrad der Wirkstoffkombinationen. Die Errechnung des additiven Wirkungsgrades erfolgt nach der Formel von S.R. Colby (vgl. Calculating synergistic and antagonistic responses of herbicide combinations, Weeds, 15, 1967, S. 20–22).

Diese Formel lautet:

$$E = X + Y - \frac{X \cdot Y}{100},$$

wobei

X = % Schädigung durch Herbizid A bei x kg/ha Aufwandmenge,

Y = % Schädigung durch Herbizid B bei y kg/ha Aufwandmenge,

E = die erwartete Schädigung der Herbizide A + B bei x + y kg/ha Aufwandmenge bedeuten.

Ist die tatsächliche Schädigung grösser als berechnet, so ist die Wirkung der Wirkstoffkombination mehr als additiv, d.h., es liegt ein synergistischer Effekt vor. Dies wird in den folgenden biologischen Beispielen I bis III demonstriert, wobei in den beiden rechten Spalten der zugehörigen Tabellen I bis III bei den Ergebnissen der Kombinationsbehandlungen in Klammern jeweils die aus obiger Formel errechnete additive Wirkung angegeben ist, während davor die tatsächlich erzielte Wirkung steht.

Beispiel I

In einem Feldversuch an Johnsongras (Sorghum halepense) werden in einem gut entwickelten Bestand die jeweils in marktfähigen Formulierungen vorliegenden Verbindungen Ia, IIa, IIb, IIIa, IIIb, IV und Va in getrennten Versuchen einzeln sowie in den gleichfalls formulierten Kombinationen Ia + IIa, Ia + IIb, Ia + IIIa, Ia + IIIb, Ia + Iv und Ia + Va aus wässrigen Spritzbrühen in den in der Tabelle I angegebenen Wirkstoffmengen (pro Flächeneinheit) bzw. Mischungsverhältnissen auf den Unkrautpflanzenbestand gesprüht. Die Wirkung wird 3 und 8 Wochen nach der Behandlung bonitiert. Dabei ergibt sich, dass weder die Verbindung Ia, noch die anderen geprüften Wirkstoffe bei Einzelanwendung in den jeweils eingesetzten Dosierungen eine ausreichende Wirkung auf die grünen Pflanzenteile und auch auf den Wiederaufwuchs zeigen.

Bei den erfindungsgemässen Kombinationen aus der Verbindung Ia und den verschiedenen Gräserherbiziden sind die Blätter und Stengel nach 3 Wochen dagegen restlos abgetötet und die Dauerwirkung nach 8 Wochen, gemessen an der Wirkung auf den Wiederaufwuchs, liegt durchweg im Bereich von über 85% und damit deutlich höher als die Werte, die sich nach der Colby-Formel errechnen lassen. Es liegt somit eindeutig ein synergistischer Effekt vor. Das Ergebnis ist in der nachstehenden Tabelle I zusammengefasst wiedergegeben.

Tabelle I
Versuch an Sorghum halepense

| Behandlung mit Wirkstoff | Wirkstoffdosis (kg/ha) | Wirkung (% Schädigung) auf Sorghum halepense nach Wochen 3 | 8* |
|---|---|---|---|
| Verbindung Ia | 0,5 | 75 | 50 |
| Verbindung IIa | 0,12 | 60 | 50 |
| Verbindung IIb | 0,6 | 55 | 20 |
| Verbindung IIIa | 0,5 | 65 | 45 |
| Verbindung IIIb | 0,5 | 70 | 60 |
| Verbindung IV | 0,2 | 70 | 60 |
| Verbindung Va | 0,5 | 50 | 40 |
| Verbindungen Ia + IIa | 0,5 + 0,12 | 100 (90) | 90 (75) |
| Verbindungen Ia + IIb | 0,5 + 0,6 | 100 (89) | 88 (60) |
| Verbindungen Ia + IIIa | 0,5 + 0,5 | 100 (91) | 90 (72) |
| Verbindungen Ia + IIIb | 0,5 + 0,5 | 100 (92) | 93 (80) |
| Verbindungen Ia + IV | 0,5 + 0,2 | 100 (92) | 95 (80) |
| Verbindungen Ia + Va | 0,5 + 0,5 | 100 (87) | 85 (70) |

*Wirkung auf den Wiederaufwuchs

Beispiel II

In einem Versuch an den Unkräutern Deschampsia flexuosa, Calamagrostis epigeios und Carex brizoides im Forst werden die in jeweils marktfähigen Formulierungen vorliegenden Verbindungen Ia und IIb in getrennten Versuchen

einzeln sowie in der gleichfalls formulierten Kombination Ia + IIb aus wässrigen Spritzbrühen in den in der Tabelle II angegebenen Wirkstoffmengen (pro Flächeneinheit) bzw. Mischungsverhältnis auf den Unkrautpflanzenbestand gesprüht. Die Wirkung wird 2, 7 und 50 Wochen nach der Behandlung bonitiert. Es zeigt sich, dass die Wirkung der erfindungsgemässen Kombination nach 2 und 7 Wochen an 2 von 3 Pflanzenarten deutlich besser ist, als aufgrund der Berechnung nach der Colby-Formel zu erwarten gewesen wäre. An allen 3 Pflanzenarten, von denen 2 der botanischen Familie der Gramineen und eine der botanischen Familie der Cperaceen zugehören, ist die Wirkung 50 Monate nach Anwendung der erfindungsgemässen Kombination ebenfalls noch deutlich besser als nach der Anwendung der Einzelwirkstoffe. Die Kombination zeigt somit einen deutlichen synergistischen Effekt und zeichnet sich durch eine entscheidende Verbesserung der Dauerwirkung aus. Das Ergebnis ist in der nachstehenden Tabelle II zusammengefasst wiedergegeben.

Tabelle II
Versuch an Unkräutern im Forst

| Behandlung mit Wirkstoff | Wirkstoffdosis (kg/ha) | Wirkung (% Schädigung) auf die Unkräuter nach Wochen | | | | | | | | |
|---|---|---|---|---|---|---|---|---|---|---|
| | | Deschampsia flexuosa | | | Calamagrostis epigeios | | | Carex brizoides | | |
| | | 2 | 7 | 50* | 2 | 7 | 50* | 2 | 7 | 50* |
| Verbindung Ia | 1,0 | 75 | 90 | 0 | 95 | 94 | 20 | 95 | 70 | 10 |
| Verbindung IIb | 1,44 | 0 | 96 | 25 | 20 | 45 | 0 | 0 | 0 | 0 |
| Verbindungen Ia + IIb | 1,0<br>1,44 | 92 (75) | 98 (100) | 80 (25) | 98 (96) | 95 (97) | 90 (20) | 98 (95) | 80 (70) | 50 (10) |

*Wirkung auf den Wiederaufwuchs

Beispiel III

In einem weiteren Versuch an dem Forstunkraut Calamagrostis werden in einem gut entwikkelten Bestand die jeweils in marktfähigen Formulierungen vorliegenden Verbindungen Ia, IIa, IIb und IIIa in getrennten Versuchen einzeln sowie in den gleichfalls formulierten Kombinationen Ia + IIa, Ia + IIb und Ia + IIIa aus wässrigen Spritzbrühen in den in der Tabelle III angegebenen Wirkstoffmengen (pro Flächeneinheit) bzw. Mischungsverhältnissen auf den Unkrautpflanzenbestand gesprüht. Die Wirkung wird nach 4 Wochen bonitiert. Es zeigt sich, dass bei Anwendung der erfindungsgemässen Kombinationen die Wirkung auf die Grünmasse (Blätter und Stengel) entscheidend besser ist als bei vergleichsweiser Anwendung der Einzelkomponenten und auch eindeutig über den Werten liegt, die sich nach der Colby-Formel errechnen lassen. Es liegt somit ein deutlicher synergistischer Effekt vor. Das Ergebnis ist in der nachstehenden Tabelle III zusammengefasst wiedergegeben.

Tabelle III
Versuch an Calamagrostis im Forst

| Behandlung mit Wirkstoff | Wirkstoffdosis (kg/ha) | Wirkung (% Schädigung) auf Calamagrostis nach 4 Wochen |
|---|---|---|
| Verbindung Ia | 0,5 | 60 |
| Verbindung IIIa | 0,75 | 70 |
| Verbindung IIa | 0,75 | 50 |
| Verbindung IIb | 0,75 | 50 |
| Verbindungen Ia + IIIa | 0,5 + 0,75 | 100 (88) |
| Verbindungen Ia + IIa | 0,5 + 0,75 | 90 (80) |
| Verbindungen Ia + IIb | 0,5 + 0,75 | 95 (80) |

**Patentansprüche**

1. Herbizide Mittel, gekennzeichnet durch einen Gehalt an einer Verbindung der Formel I,

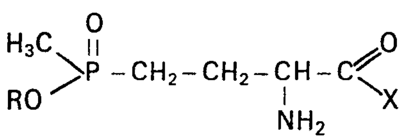
(I)

worin

R = Wasserstoff, $NH_4$, Na, K oder 1/2 Ca und

X = $-OH$ oder $-NH-CH(CH_3)-CONH-CH(CH_3)-COOH$ bedeuten, in Kombination mit einer Verbindung der Formel II,

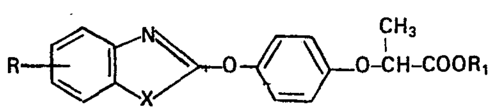
(II)

worin

R = Chlor oder Brom,

X = Sauerstoff oder Schwefel,

$R_1$ = Wasserstoff, $(C_1-C_4)$-Alkyl oder ein Kationäquivalent einer anorganischen oder organischen Base bedeutet, oder einer Verbindung der Formel III,

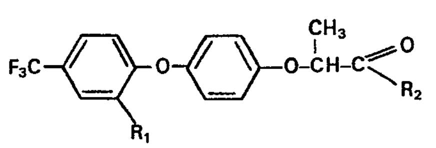
(III)

worin

$R_1$ = Wasserstoff oder Halogen,

$R_2$ = Hydroxy, $(C_1-C_6)$-Alkoxy oder Isopropyloximoxy oder die Gruppe –OKat bedeutet, wobei Kat für das Kation einer anorganischen oder organischen Base steht, oder der Verbindung der Formel IV,

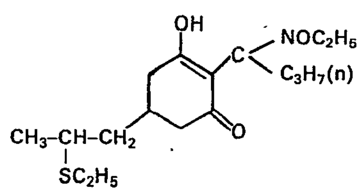
(IV)

oder einer Verbindung der Formel V,

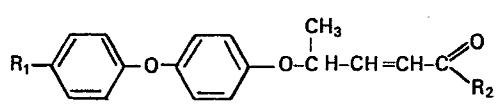
(V)

worin

$R_1$ = Halogen oder Trifluormethyl,

$R_2$ = Hydroxy, $(C_1-C_4)$-Alkoxy oder die Gruppe –OKat bedeutet, wobei Kat für das Kation einer anorganischen oder organischen Base steht, oder einer Verbindung der Formel VI,

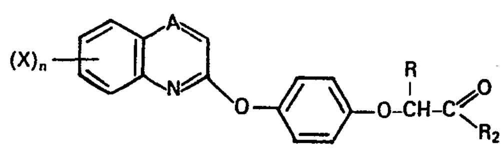
(VI)

worin A = –CH– oder –N–,

X = Halogen,

n = 0, 1 oder 2,

$R_1$ = Wasserstoff oder eine $(C_1-C_4)$-Alkylgruppe und

$R_2$ = Hydroxy, $(C_1-C_6)$-Alkoxy oder die

Gruppe –OKat bedeutet, wobei Kat für das Kation einer anorganischen oder organischen Base steht.

2. Herbizide Mittel gemäss Anspruch 1, dadurch gekennzeichnet, dass das Mischungsverhältnis der Komponenten der Formeln I und II bis VI 1:0,1 bis 1:5 beträgt.

3. Herbizide Mittel gemäss Anspruch 1, dadurch gekennzeichnet, dass das Mischungsverhältnis der Komponenten der Formeln I und II bis VI 1:0,2 bis 1:2 beträgt.

4. Herbizide Mittel, gekennzeichnet durch einen Gehalt von 2 bis 95 Gew.-% an einer Wirkstoffkombination gemäss Ansprüchen 1 bis 3, wobei der Rest zu 100 Gew.-% aus üblichen Formulierungshilfsmitteln besteht.

5. Verwendung der Mittel gemäss Ansprüchen 1 bis 4 zur Bekämpfung von Schadpflanzen.

6. Verfahren zur Bekämpfung von Unkräutern, dadurch gekennzeichnet, dass man die von ihnen befallenen Flächen herbizide Mittel gemäss Ansprüchen 1 bis 4 in Mengen entsprechend 0,1 bis 10 kg/ha Wirkstoffkombination aufbringt.

**Revendications**

1. Produits herbicides caractérisés en ce qu'ils contiennent un composé répondant à la formule I:

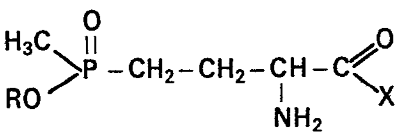

(I)

dans laquelle

R représente l'hydrogène, $NH_4$, Na, K ou 1/2 Ca et

X représente un radical –OH ou un radical –NH–$CH(CH_3)$–CONH–$CH(CH_3)$–COOH, associé:

– à un composé répondant à la formule II:

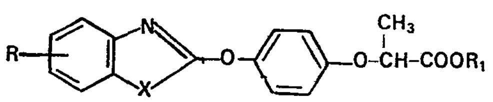

(II)

dans laquelle

R représente le chlore ou le brome,

X représente l'oxygène ou le soufre et

$R_1$ représente l'hydrogène, un alkyle en $C_1$–$C_4$ ou un équivalent cationique d'une base minérale ou organique, ou

– à un composé répondant à la formule III:

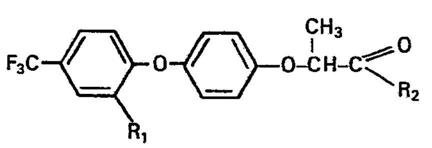

(III)

dans laquelle

$R_1$ représente l'hydrogène ou un halogène et

$R_2$ représente un radical hydroxy, un radical alcoxy en $C_1$–$C_6$, un radical isopropylidène-iminooxy ou un radical –OCat dans lequel «Cat» désigne le cation d'une base minérale ou organique, ou

– au composé de formule IV:

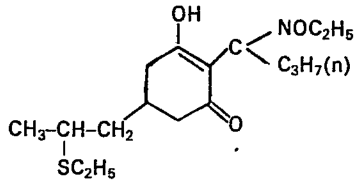

(IV)

ou

– à un composé répondant à la formule V:

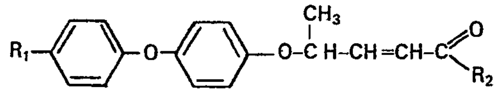

(V)

dans laquelle

$R_1$ représente un halogène ou un radical trifluorométhyle et

$R_2$ représente un radical hydroxy, un radical alcoxy en $C_1$–$C_4$ ou un radical –OCat dans lequel «Cat» désigne le cation d'une base minérale ou organique, ou

– à un composé répondant à la formule VI:

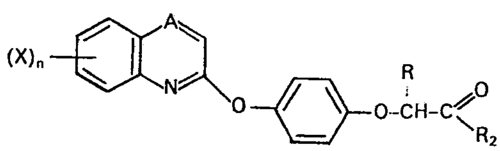

(VI)

dans laquelle

A représente –CH– ou –N–,

X représente un halogène,

n est égal à 0, à 1 ou à 2,

$R_1$ représente l'hydrogène ou un radical alkyle en $C_1$–$C_4$ et

$R_2$ représente un radical hydroxy, un radical alcoxy en $C_1$–$C_6$ ou un radical –OCat, dans lequel «Cat» désigne le cation d'une base minérale ou organique.

2. Produits herbicides selon la revendication 1 caractérisés en ce que le rapport, en quantités, de la composante de formule I aux composantes de formules II à VI est compris entre 1:0,1 et 1:5.

3. Produits herbicides selon la revendication 1 caractérisés en ce que le rapport, en quantités, de la composante de formule I aux composantes de formule II à VI est compris entre 1:0,2 et 1:2.

4. Produits herbicides caracterisés en ce qu'ils contiennent de 2 à 95% en poids d'une association de matières actives selon l'une quelconque des revendications 1 à 3, le complément à 100% étant constitué par des adjuvants de formulation usuels.

5. Application des produits selon l'une quelconque des revendications 1 à 4 à la lutte contre des plantes nuisibles.

6. Procédé pour combattre des plantes adventices, procédé caractérisé en ce qu'on applique des produits herbicides selon l'une quelconque des revendications 1 à 4, en des quantités correspondant à des doses de l'association de matières actives comprises entre 0,1 et 10 kg/ha.

## Claims

1. Herbicidal agents, characterized by a content of a compound of formula I

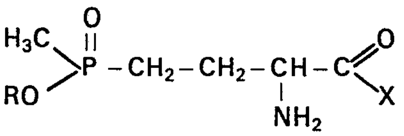

(I)

wherein

R is hydrogen, $NH_4$, Na, K or 1/2 Ca and

X is –OH or –NH–CH($CH_3$)–CONH–CH($CH_3$)–COOH, in combination with a compound of formula II

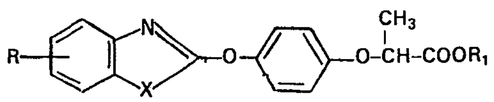

(II)

wherein

R is chlorine or bromine,

X is oxygen or sulfur,

$R_1$ is hydrogen, ($C_1$–$C_4$)alkyl or a cation equivalent of an inorganic or organic base, or with a compound of formula III

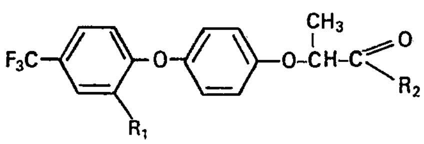

wherein

$R_1$ is hydrogen or halogen,

$R_2$ is hydroxy, ($C_1$–$C_6$)alkoxy or isopropyloximoxy or the group –OKat, Kat being the cation of an inorganic or organic base, or with a compound of formula IV

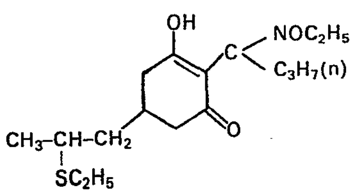

(IV)

or with a compound of formula V

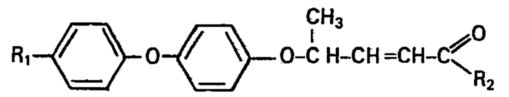

(V)

wherein

$R_1$ is halogen or triflouromethyl,

$R_2$ is hydroxy, ($C_1$–$C_4$)-alkoxy or the group –OKat, wherein Kat is the cation of an inorganic or organic base, or with a compound of formula VI

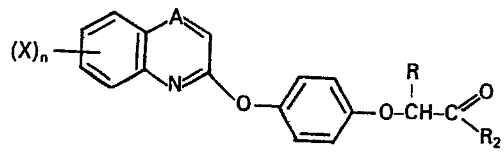

(VI)

wherein

A is –CH– or –N–

X is a halogen,

n is 0, 1 or 2,

$R_1$ is hydrogen or ($C_1$–$C_4$)alkyl and

$R_2$ is hydroxy, alkoxy or the group –OKat, wherein Kat is the cation of an inorganic or organic base.

2. Herbicidal agents according to claim 1, wherein the mixing ratio of the components of formulae I and II to VI is 1:0.1 to 1:5.

3. Herbicidal agents according to claim 1, wherein the mixing ratio of the components of formulae I and II to VI is 1:0.2 to 1:2.

4. Herbicidal agents characterized by a content of from 2 to 95 weight % of a combination of active substances according to claims 1 to 3, the remainder to 100 weight % consisting of usual formulation auxiliaries.

5. The use of the compositions according to claims 1 to 4 for combatting plant pests.

6. A process for combatting weeds, which comprises applying the herbicidal agents according to claims 1 to 4 onto the areas infested by them in quantities corresponding to 0.1 to 10 kg/ha of combination of active substance.